(19) **Europäisches Patentamt**
European Patent Office
Office européen des brevets

(11) **EP 2 789 436 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
**B27K 5/00** *(2006.01)* **B23K 26/00** *(2014.01)*
**B27M 1/00** *(2006.01)*

(21) Anmeldenummer: **13001871.6**

(22) Anmeldetag: **11.04.2013**

(54) **Verfahren zum Behandeln einer Oberfläche eines Werkstücks aus Holz oder Holzwerkstoff**

Method for treating a surface of a workpiece made of wood or wooden material

Procédé de traitement d'une surface d'une pièce en bois ou en matériau dérivé du bois

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.10.2014 Patentblatt 2014/42**

(73) Patentinhaber: **Flooring Technologies Ltd.**
**Pieta PTA 9044 (MT)**

(72) Erfinder: **Siebert, Axel**
**17207 Röbel (DE)**

(74) Vertreter: **Rehmann, Thorsten et al**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
**EP-A1- 0 481 179 DE-C1- 19 718 287**
**FR-A1- 2 929 876**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zum Behandeln zumindest einer Oberfläche eines Werkstücks aus Holz oder Holzwerkstoff und eine Platte aus Holz oder Holzwerkstoff.

Holz und Holzwerkstoffe besitzen ein breites Einsatzspektrum insbesondere bei der Herstellung von Möbelstücken sowie als Fußbodenbelag. Da es sich um Naturprodukte handelt, sind diese stark durch Umwelteinflüsse beeinflussbar. Durch Temperatur- oder Feuchteänderungen können sich die Eigenschaften eines Produktes, das aus Holz oder einem Holzwerkstoff hergestellt ist, beträchtlich ändern. So kann es durch die hygroskopischen Eigenschaften von Holz und Holzwerkstoffen zu einer Quellneigung kommen, die insbesondere bei Holzwerkstoffen problematisch ist und die möglichen Einsatzbereiche, beispielsweise für einen Fußbodenbelag, auf trockene Bereiche in geschlossenen Räumen begrenzt.

Um die Quellneigung eines Holz- oder Holzwerkstoffprodukts zu vermindern, werden oftmals Vergütungsmethoden angewandt. So können Oberflächen durch Aufbringen von synthetischen Harzen, Paraffinen oder Ölen abgesperrt und somit das Eindringen von Wasser verhindert werden. Auch eine Imprägnierung des ganzen Werkstücks ist möglich. Solche Verfahren weisen den Nachteil auf, dass sie relativ teuer und kompliziert in der Anwendung sind. Weiterhin sind die Ergebnisse dieser Methoden oft nicht optimal, und es können unerwünschte Nebeneffekte oder Emissionen durch die Behandlung mit Fremdstoffen entstehen.

Einen weiteren Ansatz zur Oberflächenvergütung von Produkten aus Holz oder Holzwerkstoffen stellt die Behandlung des Produkts durch Hitze dar. In Holz und Holzwerkstoffen liegen freie Hydroxylgruppen vor, die wesentlich zur Aufnahme von Wasser beitragen. Bekannte Verfahren zur Vergütung der Oberflächen zielen daher darauf ab, die Anzahl der freien Hydroxylgruppen zu reduzieren. Dazu wird das Holz oder der Holzwerkstoff meist auf Temperaturen zwischen 170 und 240 °C erhitzt, wodurch die hydrophilen Hydroxylgruppen in den Zellwänden im Wesentlichen abgetrennt oder inaktiviert werden. Durch diesen Effekt wird die Wasseraufnahmefähigkeit des Holzes oder des Holzwerkstoffes und somit die Quellneigung und Schwindung verringert. Ein nach diesem Verfahren hergestelltes thermisch modifiziertes Holz oder auch Thermoholz weist im Regelfall mechanische Nachteile wie Versprödung und geringere Zug-, Druck- und Biegefestigkeiten auf. Ebenfalls kann es zur Verfärbung des Holzes und zu unerwünschten Gerüchen kommen.

Ein Ansatz zur thermischen Behandlung von Holzwerkstoffplatten besteht darin, die zur Herstellung eingesetzten Holzspäne einer thermischen Behandlung zu unterziehen, noch bevor sie zur Platte weiterverarbeitet werden. Ebenso kann die Thermobehandlung beim Verpressen der Holzwerkstoffplatte durchgeführt werden. Auch diese Verfahren haben im Allgemeinen den Nachteil, dass sie dem Produkt Feuchtigkeit entziehen und damit einhergehend oftmals dessen mechanische Eigenschaften verschlechtern.

Aus der CN 201626012 U ist es bekannt, die Holzoberflächen durch leichtes Karbonisieren optisch und haptisch aufzuwerten, indem eine dreidimensionale Struktur erzeugt wird. Eine Vergütung der Oberfläche wird dabei nicht angestrebt.

Die EP 1719596 A1 kann als nächstliegender Stand der Technik angesehen werden und beschreibt den Einsatz eines Lasers, um Paneele zu schneiden. Dabei wird der Laserstrahl parallel zur Schnittkante geführt und Material abgetragen. Es lässt sich so eine hohe Qualität der Schnittkanten erreichen. Wie in diesem Dokument beschrieben, kann es weiterhin zu einer oberflächlichen Verkohlung bzw. Verbrennung der Schnittkanten kommen. Durch diesen Effekt sowie durch das Aufschmelzen von Bindemitteln im Holzfaserwerkstoff wird die Schnittkante "versiegelt" und es kann weniger Wasser eindringen. Genauere Angaben zu dem Effekt macht die EP 1719596 A1 nicht. In jedem Fall wird aber nur der Bereich in unmittelbarer Nähe des Laserschnitts beeinflusst, eine Tiefenwirkung findet nicht statt.

Aus der WO 2006/090287 A1 ist ebenfalls der Einsatz eines Lasers bei der Herstellung von Fußbodenpaneelen bekannt. Dabei werden einerseits durch die hohe Schnittqualität des Lasers optische Verbesserungen an den Stoßkanten des verlegten Fußbodens erzielt, andererseits wird beschrieben, Teile der Verbindungsbereiche der Paneele mittels des Lasers zu behandeln, um durch teilweises Verbrennen der Oberflächenschichten eine Farbveränderung zu erreichen.

Die EP 0481179 A1 beschreibt ein Verfahren zur optischen Behandlung von Holz derart, dass die natürliche Maserung stärker zur Geltung kommt. Dies wird dadurch erreicht, dass die zu behandelnde Oberfläche mit Infrarotstrahlung beispielsweise eines $CO_2$-Lasers flächendeckend bestrahlt wird.

Die FR 2929876 A1 beschreibt ein Verfahren zur optischen Modifikation von Holzoberflächen, bei dem Laser mit einer Wellenlänge zwischen 100 nm und 500 nm eingesetzt werden, um die Oberflächenschicht zu passivieren und so zu erreichen, dass bei späterer Einstrahlung von zum Beispiel Sonnenlicht die Optik der Oberfläche unverändert bleibt.

Die DE 19718287 C1 offenbart ein Verfahren zur Modifizierung von Holzoberflächen mittels energiereicher Strahlung bei der durch einen Laserablationsprozess Material verdampft und somit abgetragen wird.

Der Erfindung liegt daher die Aufgabe zugrunde, ein Verfahren zum Behandeln zumindest einer Oberfläche eines Werkstücks aus Holz oder Holzwerkstoff vorzuschlagen, das eine Oberflächenvergütung und insbesondere eine Verminderung der Wasseraufnahme des Werkstücks erreicht, und das einfach und kostengünstig einsetzbar ist, ohne nachteilige Auswirkungen auf andere Eigenschaften des Werkstücks aufzuweisen.

Die Aufgabe wird dadurch gelöst, dass durch einen Laser, einen Mikrowellenstrahler oder einen Elektrostrahl eine definierte Wärmemenge in ein schichtförmiges Volumen direkt hinter der behandelten Oberfläche eingebracht wird, wobei der Strahl eine Eindringtiefe von zumindest 0,3 mm aufweist und im Wesentlichen senkrecht auf die zu behandelnde Oberfläche auftrifft.

Durch diese Ausgestaltung wird lediglich in der Nähe der Oberfläche des Werkstücks eine Vergütung bewirkt. Die vergütete Schicht ist dann eine effektive Barriere gegen das Eindringen von Wasser in das Werkstück. Gleichzeitig bleibt ein großer Teil des Werkstücks unbehandelt, sodass keine nachteilige Beeinflussung anderer Eigenschaften, wie zum Beispiel mechanischer oder ästhetischer Eigenschaften, vorliegt. Da, anders als bei anderen bekannten Verfahren zum thermischen Modifizieren von Holz, nicht das gesamte Volumen erwärmt wird, ist der benötigte Einsatz von Energie und Zeit geringer. Es ist auch kein zusätzlicher Stoffauftrag notwendig, was ebenfalls dazu beiträgt, das Verfahren kostengünstig zu gestalten. Das Verfahren lässt sich bei guter Prozesssicherheit relativ einfach und sicher in vorhandene Prozessstrukturen einbinden. Es ist ökologisch gut verträglich und setzt keine schädlichen Emissionen frei.

Unter einem schichtförmigen Volumen wird dabei ein Bereich verstanden, der auf der einen Seite von der zu behandelnden Oberfläche begrenzt wird und sich mit einer im Wesentlichen konstanten Dicke entlang der gesamten zu behandelnden Oberfläche erstreckt. Die Dicke ist dabei die Ausdehnung des Volumens senkrecht zu der zu behandelnden Oberfläche. Wenn das Werkstück quaderförmig ist, dann entspricht ein schichtförmiges Volumen zum Beispiel dem Bereich, den man erhält, wenn mit einem Schnitt parallel zu der zu behandelnden Oberfläche eine "Scheibe" oder Schicht des Werkstücks abgetrennt wird. Vorzugsweise ist die so behandelte Schicht dünn im Vergleich zur gesamten Ausdehnung des Werkstücks. So kann die Schicht, in die die definierte Wärmemenge eingebracht wird, zum Beispiel weniger als 5%, bevorzugt weniger als 3% der gesamten Dicke des Werkstücks ausmachen.

Unter dem Merkmal, dass sich das schichtförmige Volumen direkt hinter der behandelten Oberfläche befindet, wird verstanden, dass sich das Volumen für einen Betrachter, der senkrecht auf die zu behandelnde Oberfläche sieht, in Blickrichtung direkt an diese Fläche anschließt.

Bevorzugt wird der Wärmeeintrag so ausgeführt, dass außerhalb des schichtförmigen Volumens keine oder nur eine geringfügige Erwärmung eintritt. Unter einer geringfügigen Erwärmung wird hierbei verstanden, dass außerhalb des schichtförmigen Volumens eine Erwärmung um maximal 30°C, bevorzugt von maximal 10°C auftritt. Auf diese Art und Weise lässt sich der zu vergütende Bereich exakt definieren und es wird nur dort Energie eingesetzt, wo sie sinnvoll zur Bildung einer Barriere gegen das Eindringen von Wasser beiträgt.

Vorteilhafterweise wird die Wärmemenge innerhalb einer kurzen Zeit in das schichtförmige Volumen eingebracht. Dadurch lässt sich einerseits die Produktionsgeschwindigkeit erhöhen und andererseits die Gesamtenergieeffizienz steigern. Unter einer kurzen Zeit wird hierbei ein Bereich von Sekunden bis Minuten verstanden, der in jedem Fall aber kürzer als eine Stunde ist.

Holzwerkstoffe werden oft als Fußbodenbeläge verwendet. Dabei werden die oben liegenden Seiten in der Regel mit einem Dekor und oftmals mit weiteren Funktions- und Schutzschichten versehen, die zum Beispiel Kunstharze enthalten können. Eine solche Beschichtung bietet in der Regel bereits einen zuverlässigen Schutz gegen das Eindringen von Wasser, sodass Wasser lediglich durch die Schmalseiten der Platte eindringen kann. In einem solchen Fall ist es vorteilhaft, wenn das schichtförmige Volumen hinter einer Schmalseite einer zu vergütenden Platte aus Holz oder Holzwerkstoff liegt. Eine Platte kann dabei zum Beispiel ein Brett, ein Paneel, eine Bohle oder eine großformatige Holzwerkstoffplatte sein, die erst noch in einzelne Elemente aufgeteilt wird. Eine Schmalseite ist dabei typischerweise, z.B. im Fall eines Fußbodenpaneels eine der 4 Seiten, die nicht die Oberseite (also die Sichtseite) und nicht die dieser gegenüberliegende Unterseite des Paneels sind. Besonders anfällig für das Eindringen von Wasser ist die Fügeverbindung eines Fußbodenpaneels. Das erfindungsgemäße Verfahren ist daher besonders geeignet, Fußbodenpaneele im Bereich ihres Verbindungsprofils zu vergüten. Insbesondere kann bei einer Nut-und-Feder-artigen Verbindung die Oberfläche der Feder des Paneels vergütet werden.

Die eingebrachte Wärmemenge ist vorzugsweise so bemessen, dass sich die Anzahl der freien OH-Gruppen (Hydroxylgruppen) in dem schichtförmigen Volumen signifikant verringert. Darunter ist zu verstehen, dass die Anzahl der freien OH-Gruppen um zumindest 60%, bevorzugt um zumindest 80% abnimmt. Je mehr Hydroxylgruppen neutralisiert werden, umso weniger Wasser kann in das Produkt eindringen.

Die Wärme wird durch elektromagnetische Strahlung oder einen Teilchenstrahl eingebracht. Durch einen solchen Strahl, der ein Laserstrahl, ein Mikrowellenstrahl oder ein Elektronenstrahl ist, lässt sich die eingebrachte Wärmemenge relativ exakt dosieren. Durch Variation der Strahlparameter wie zum Beispiel Querschnittsfläche, Leistungsdichte, Pulsdauer, Photonen- bzw. Elektronenenergie lassen sich die eingebrachte Energie sowie das erwärmte Volumen exakt steuern, indem zum Beispiel auch die Verweildauer des Strahls und die Eindringtiefe angepasst werden können.

Wenn die Wärmemenge durch einen Laserstrahl eingebracht wird, ist die Energiedichte in der Fokusebene des Lasers am höchsten. Die zu vergütende Schicht kann sich während der Vergütung in der Fokusebene befinden. Da das Verfahren aber nicht von hohen Energiedichten abhängig ist, kann es auch ausgeführt werden, wenn die zu vergütende Schicht außerhalb der Fokusebene und insbesondere außerhalb des Rayleigh-Bereichs liegt. Dies kann zum Beispiel von Vorteil sein, wenn bei ansonsten vorgegebenen Laserparametern eine zu starke Erhitzung des schichtförmigen Volumens vermieden werden soll. Gleichzeitig besitzt der Laserstrahl einen umso größeren Querschnitt, je weiter man sich von der Fokusebene entfernt. Dadurch wird es einfacher, die komplette Oberfläche zu bestrahlen. Die zu vergütende Schicht kann dabei in Strahlrichtung vor oder hinter der Fokusebene liegen. Liegt die Schicht in Strahlrichtung vor der Fokusebene, so kann innerhalb der Brennweite des Lasers gearbeitet werden, z.B. in einem virtuellen Fokus.

Bevorzugt dringt der Strahl dabei weniger als 2mm ein, da eine Vergütung einer Schicht von 2mm Dicke im Regelfall ausreicht. Je nach Einsatzzweck kann auch eine vergütete Schichtdicke von nur 1mm ausreichen. Das Material wird dabei durch die Vergütung so geringfügig beeinträchtigt, dass keine weitere Nachbearbeitung mehr notwendig ist. Die Eindringtiefe beträgt aber zumindest 0,3 mm. Eine minimale Eindringtiefe ist notwendig, da die Dicke der vergüteten Schicht nicht beliebig reduziert werden kann, da sonst die das Eindringen von Feuchtigkeit hemmenden Eigenschaften verloren gehen. Unter der Eindringtiefe wird eine Tiefe verstanden, in der die Intensität des Strahls auf weniger als das 1/e-fache des Ausgangsstrahls abgefallen ist.

Der Strahl kann mittels einer oder mehrerer optischer Elemente auf das Werkstück gelenkt werden. Optische Elemente können dabei zum Beispiel Spiegel, Prismen, Blenden oder auch Glasfasern sein. Auf diese Weise lassen sich flexiblere Anordnungen erreichen, da die Strahlquelle keine bestimmte Ausrichtung haben muss und so eine kompakte Produktionsanlage verwirklicht werden kann.

Der Strahl trifft im Wesentlichen senkrecht auf die zu vergütende Fläche auf. "Im Wesentlichen senkrecht" bedeutet dabei, dass kleine Abweichungen von der Senkrechten möglich sind. Diese können zum Beispiel kleiner als 10° sein. Durch eine solche Ausgestaltung lässt sich die Energie besonders exakt in das gewünschte zu vergütende Volumen einbringen.

Wenn das Werkstück am Strahl vorbeigeführt wird, lässt sich das Verfahren einfach in bereits bestehende Produktionsanlagen integrieren. Es entfallen dann unter Umständen auch aufwendige Strahlablenkungseinrichtungen, und die Strahlquelle kann ortsfest sein, was zu einer verringerten Fehleranfälligkeit führt.

Wenn das Werkstück symmetrisch aufgebaut ist, zum Beispiel, wenn für ein Fußbodenpaneel mehrere Seitenkanten gleichartig behandelt werden sollen, so können mehrere Strahlquellen vorgesehen sein, die zur gleichen Zeit mehrere einander gegenüberliegende Oberflächen des Werkstücks behandeln können. Ebenso denkbar ist aber auch eine gleichzeitige Bearbeitung von Oberflächen, die einen rechten Winkel miteinander bilden.

Wenn der Strahl in einer ersten Richtung eine Ausdehnung aufweist, die zumindest so groß ist wie die Ausdehnung des Werkstücks in der ersten Richtung, sodass das Werkstück lediglich in einer zweiten Richtung, die vorzugsweise senkrecht zu der ersten Richtung steht, an dem Strahl vorbeigeführt werden muss, um eine vollständige Behandlung der zu behandelnden Oberfläche des Werkstücks zu erreichen, vereinfacht sich das Verfahren und nimmt weniger Zeit in Anspruch. Der Strahl ist somit ein Flächenstrahl. Er überdeckt dann zu jedem Zeitpunkt die komplette Ausdehnung des Werkstücks in einer Richtung, die vorzugsweise senkrecht auf der Transportrichtung des Werkstücks steht. Dadurch wird auf einfache Art und Weise erreicht, dass eine vollständige Seitenfläche z.B. eines Fußbodenpaneels bearbeitet wird. Die Produktionsgeschwindigkeit und die Effizienz des Verfahrens können gesteigert werden, da zum Beispiel bei der Produktion von Fußbodenpaneelen regelmäßig ohnehin eine Transportstrecke vorgesehen ist, an der die Strahlquelle bzw. die Strahlquellen seitlich angeordnet werden können.

Wenn der Strahl in einem rasterartigen Muster auf der zu behandelnden Oberfläche des Werkstücks entlang geführt wird, lassen sich Nachteile, die mit einer Aufweitung des Strahls zu einem flächigen Strahl verbunden sind, vermeiden. Weiterhin sind Anwendungsfälle denkbar, in denen nicht die gesamte Oberfläche gleichermaßen vergütete werden soll, sodass sich durch eine entsprechende rasterartige Ablenkung des Strahls verschieden stark vergütete Bereiche einstellen lassen.

Insbesondere, wenn der Strahl ein hochenergetischer Strahl wie zum Beispiel ein Laserstrahl ist, ist es möglich, mit dem Strahl neben der Vergütung weitere Verfahrensschritte auszuüben. So kann ein Laserstrahl zum Beispiel analog einer Fräse eingesetzt werden und zum Beispiel die Kanten von Fußbodenpaneelen so profilieren, so dass sie zum Beispiel über eine Klickverbindung miteinander verbunden werden können. Hierbei ist eine Profilierung und gleichzeitige Vergütung möglich, was bei bisher bekannten Systemen, die einen mittels Laser ausgeführten Schnitt vorsehen, nicht der Fall ist. Bei diesen Systemen wird der Laser regelmäßig lediglich parallel zur Schnittkante eingesetzt. Somit wird alles Material, das von dem Laser bestrahlt wird, verdampft, sodass kein durch Laserstrahlung vergütetes Material zurückbleibt. Erfindungsgemäß ist es jedoch vorgesehen, dass der Laser auch eine definierte Wärmemenge in das Werkstück einbringt, also nicht alles bestrahlte Material vollständig verdampft wird.

Insbesondere ist es von Vorteil, wenn die Erwärmung des schichtförmigen Volumen derart realisiert wird, dass die Temperatur innerhalb des schichtförmigen Volumens unterhalb der Verbrennungs- bzw. der Verkohlungstemperatur des Holzes bzw. des Holzwerkstoffs bleibt. Die kritischen Temperaturen liegen dabei typischerweise zwischen 200 und 300°C. Die Hydrolysereaktion findet bei Temperaturen ab 120°C aufwärts statt. Eine optimale Vergütung wird erfahrungsgemäß bei Temperaturen von 140 bis 170°C erzielt. Durch höhere Temperaturen lässt sich die Bestrahlungszeit senken.

Vergütungstemperaturen von 160 bis 230°C haben sich daher als besonders wirtschaftlich herausgestellt.

Im Folgenden wird die Erfindung anhand von drei Ausführungsbeispielen und zwei Figuren näher erläutert. Es zeigen:

Figur 1: Eine Seitenansicht auf ein Werkstück, das nach dem erfindungsgemäßen Verfahren behandelt wird

Figur 2: Eine Schemaskizze eines Laserstrahls mit eingezeichneten Bezugsgrößen

Beispiel 1

Die Schmalseiten eines aus Holzwerkstoff gefertigten Fußbodenpaneel werden mit einem erfindungsgemäßen Verfahren vergütet. Dabei ist das Fußbodenpaneel auf einer im verlegten Zustand nach oben weisenden Oberfläche bereits so beschichtet, dass eine Vergütung nicht notwendig ist. Weiterhin sind die Schmalseiten bereits endbearbeitet und ein entsprechendes Verbindungsprofil herausgearbeitet worden. Die Oberflächen der Schmalseiten werden nun durch Laserbestrahlung derart erwärmt, dass die Oberflächen bis zu einer Tiefe von etwa 1 mm vergütet bzw. karbonisiert werden. Es wird dabei kein Material abgetragen und es ist keine weitere konventionelle Nachbearbeitung notwendig. Lediglich die behandelte Oberfläche kann sich leicht verfärben, was aber nicht störend ist, da die Schmalseiten im verlegten Zustand nicht sichtbar sind. Je nach Intensität der Behandlung kann das Verfahren auch vollständig ohne Verfärbungen der Oberflächen ausgeführt werden.

Beispiel 2

Es wird ein Fußbodenpaneel analog Beispiel 1 behandelt. Wenn die zu behandelnden Schmalseiten aber nicht verwendungsfertig sondern lediglich halbfertig vorliegen, kann eine intensivere Bestrahlung mit einer Eindringtiefe und somit einer Vergütungsschichtdicke von bis zu 2mm erfolgen. Dabei kann es zu einem geringen Materialabtrag sowie zu relativ starken Oberflächenverfärbungen kommen. Es ist dann eine konventionelle Nachbearbeitung notwendig, bei der darauf zu achten ist, dass kein Material über die maximal erreichte Vergütungstiefe hinaus abgetragen wird.

Beispiel 3

Ein aus einer Holzwerkstoffplatte hergestelltes Fußbodenpaneel wird von einem Laser gleichzeitig oberflächenvergütet und mit einem Verbindungsprofil versehen. Dabei kann die Leistungsdichte des Lasers je nach Bearbeitungszustand variiert werden, um neben dem Materialabtrag auch eine Tiefenvergütung zu erzielen. Die Vergütungstiefe kann dabei auch größer als 2mm sein. Eine konventionelle Nachbearbeitung der Verbindung durch Fräsen kann notwendig sein, um hohe Genauigkeiten zu realisieren.

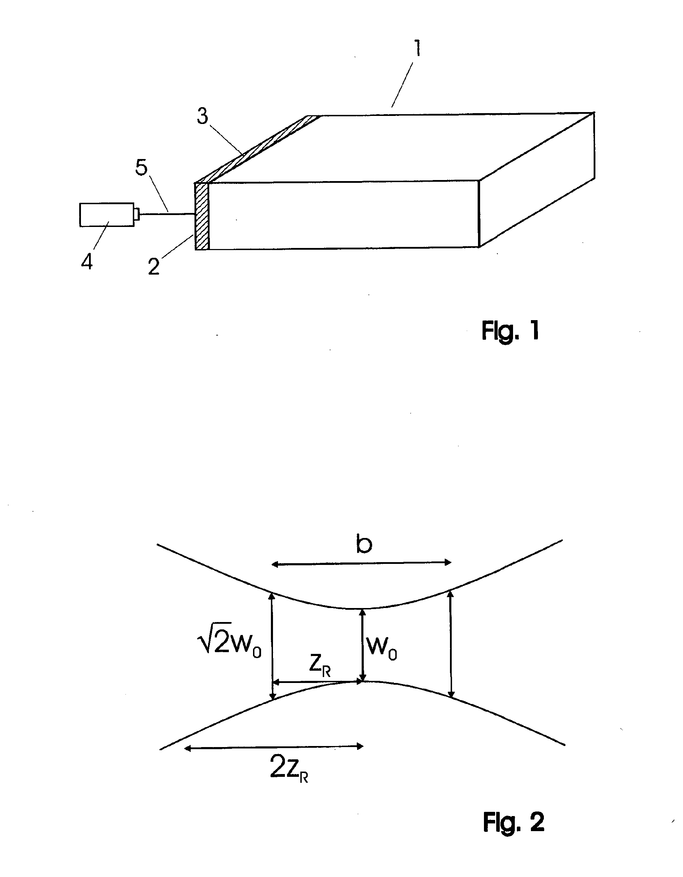

Figur 1 zeigt eine perspektivische Seitenansicht einer Platte 1. Ein hinter einer Oberfläche 2 liegendes schichtförmiges Volumen 3 wird von einem Laser 4 emmitierten Laserstrahl 5 bestrahlt. Das schichtförmige Volumen liegt dabei hinter der die Platte auf der linken Seite begrenzenden Oberfläche 2. Es können nacheinander alle vier Schmalseiten der Platte behandelt werden. Die sichtbaren Oberflächen, die das schichtförmige Volumen 3 begrenzen, sind schraffiert eingezeichnet. Das schichtförmige Volumen wird durch den Laserstrahl 5 erwärmt, sodass die Anzahl der freien OH-Gruppen reduziert wird und eine Vergütung erfolgt. Der Laserstrahl 5 steht dabei im Wesentlichen senkrecht auf der Oberfläche 2. Der Laser 4 kann beispielsweise ein $CO_2$-Lasersystem mit einer Wellenlänge von 10,6 $\mu$m sein.

Figur 2 zeigt eine schemahafte Darstellung der Strahltaille eines Laserstrahls mit eingezeichneten Bezugsgrößen. $W_0$ gibt dabei den minimalen Strahldurchmesser an. Dieser wird in der Fokusebene erreicht. $z_R$ ist die sogenannte "Rayleigh-Länge". Sie gibt den Abstand in Strahlrichtung von der Fokusebene an, in dem sich der Strahldurchmesser auf das $\sqrt{2}$ -fache des minimalen Strahldurchmessers vergrößert hat. Der mit b gekennzeichnete Bereich ist der "Rayleigh-Bereich", in dem der Strahldurchmesser maximal das $\sqrt{2}$ -fache des minimalen Strahldurchmessers beträgt. Das linke Ende des mit $2z_R$ bezeichneten Pfeils kennzeichnet eine Position, in der eine Vergütung außerhalb des Rayleigh-Bereichs erfolgen kann. Im dargestellten Fall befindet sich das zu vergütende Werkstück dann in einem Abstand von der Fokusebene, der dem 2-fachen der Rayleigh-Länge entspricht. Der Faktor 2 ist hierbei willkürlich gewählt und kann den Umständen entsprechend angepasst werden.

**Patentansprüche**

1. Verfahren zum Behandeln zumindest einer Oberfläche eines Werkstücks in Form einer Schmalseite einer Platte aus Holz oder Holzwerkstoff zur Verwendung als Fußbodenbelag, wobei durch einen Laser, einen Mikrowellenstrahler oder einen Elektronenstrahl eine definierte Wärmemenge in ein schichtförmiges Volumen, das direkt hinter der behandelten Oberfläche liegt, eingebracht wird, wobei der Strahl eine Eindringtiefe von zumindest 0,3 mm aufweist und im Wesentlichen senkrecht auf die zu behandelnde Oberfläche auftrifft.

2. Verfahren nach Anspruch 1, **dadurch gekennzeichnet, dass** die Wärmemenge derart eingebracht wird, dass außerhalb des schichtförmigen Volumens keine oder nur eine geringfügige Erwärmung des Werkstücks eintritt.

3. Verfahren nach einem der vorstehenden Ansprüche, **dadurch gekennzeichnet, dass** die Wärmemenge innerhalb einer Zeitspanne, die kleiner als 10 Minuten, bevorzugt kleiner als eine Minute ist, eingebracht wird.

4. Verfahren nach einem der vorstehenden Ansprüche, **dadurch gekennzeichnet, dass** der Strahl eine Eindringtiefe von weniger als 3 mm, bevorzugt weniger als 2 mm, aufweist.

5. Verfahren nach einem der vorstehenden Ansprüche, **dadurch gekennzeichnet, dass** der Strahl eine Eindringtiefe von zumindest 1 mm, aufweist.

6. Verfahren nach einem der vorstehenden Ansprüche, **dadurch gekennzeichnet, dass** das Werkstück am Strahl vorbeigeführt wird, wobei die Strahlquelle ortsfest bleibt.

7. Verfahren nach einem der vorstehenden Ansprüche, **dadurch gekennzeichnet, dass** mehrere einander gegenüberliegende Seiten des Werkstücks gleichzeitig behandelt werden.

8. Verfahren nach einem der vorstehenden Ansprüche, **dadurch gekennzeichnet, dass** der Strahl in einem rasterartigen Muster auf der zu behandelnden Oberfläche entlang geführt wird.

9. Verfahren nach einem der vorstehenden Ansprüche, **dadurch gekennzeichnet, dass** der Strahl einen Materialabtrag bewirkt, sodass eine Kantenbearbeitung bzw. -profilierung oder eine Durchtrennung des Werkstücks möglich wird.

10. Verfahren nach einem der vorstehenden Ansprüche, **dadurch gekennzeichnet, dass** die Oberfläche während des Behandelns außerhalb einer Fokusebene des die Wärme einbringenden Strahls, bevorzugt außerhalb eines Rayleigh-Bereichs, liegt.

11. Verfahren nach einem der vorstehenden Ansprüche, **dadurch gekennzeichnet, dass** die eingebrachte Wärmemenge derart dimensioniert ist, dass eine Temperatur des schichtförmigen Volumens unterhalb einer Verbrennungs- bzw. Verkohlungstemperatur bleibt.

## Claims

1. Method for treating at least one surface of a workpiece in the form of a narrow side of a board of wood or wooden material for use as a floor covering, wherein a defined amount of heat is introduced by a laser, a microwave emitter or an electron beam into a volume in the form of layers that lies directly behind the surface to be treated, wherein the beam has a depth of penetration of at least 0.3 mm and impinges substantially perpendicularly on the surface to be treated.

2. Method according to Claim 1, **characterized in that** the amount of heat is introduced in such a way that the workpiece is not heated up at all, or only slightly, outside the volume in the form of layers.

3. Method according to one of the preceding claims, **characterized in that** the amount of heat is introduced within a time period that is less than 10 minutes, preferably less than one minute.

4. Method according to one of the preceding claims, **characterized in that** the beam has a depth of penetration of less than 3 mm, preferably less than 2 mm.

5. Method according to one of the preceding claims, **characterized in that** the beam has a depth of penetration of at least 1 mm.

6. Method according to one of the preceding claims, **characterized in that** the workpiece is moved past the beam, while the source of the beam remains fixed in place.

7. Method according to one of the preceding claims, **characterized in that** a number of sides of the workpiece lying opposite one another are treated simultaneously.

8. Method according to one of the preceding claims, **characterized in that** the beam is moved along on the surface to be treated in a grid-like pattern.

9. Method according to one of the preceding claims, **characterized in that** the beam brings about a removal of material, so that edge working or profiling or severing of the workpiece becomes possible.

10. Method according to one of the preceding claims, **characterized in that** the surface lies outside a focal plane of the beam introducing the heat, preferably outside a Rayleigh range, during the treatment.

11. Method according to one of the preceding claims, **characterized in that** the amount of heat introduced is set to such a level that a temperature of the volume in the form of layers remains below a burning or charring temperature.

**Revendications**

1. Procédé de traitement d'au moins une surface d'une pièce, prenant la forme d'un petit côté d'une plaque en bois ou en matériau à base de bois destinée à être utilisée comme revêtement de plancher, procédé dans lequel on introduit une quantité de chaleur définie dans un volume en forme de couche qui se situe juste derrière la surface traitée, par un laser, un émetteur de micro-ondes ou un faisceau d'électrons, le faisceau présentant une profondeur de pénétration d'au moins 0,3 mm et étant incident sensiblement perpendiculairement à la surface à traiter.

2. Procédé selon la revendication 1, **caractérisé en ce que** la quantité de chaleur est introduite de telle sorte qu'aucun ou seulement un léger échauffement de la pièce se produit en dehors du volume en forme de couche.

3. Procédé selon l'une des revendications précédentes, **caractérisé en ce que** la quantité de chaleur est introduite dans une période de temps qui est inférieure à 10 minutes, de préférence inférieure à une minute.

4. Procédé selon l'une des revendications précédentes, **caractérisé en ce que** le faisceau présente une profondeur de pénétration de moins de 3 mm, de préférence de moins de 2 mm.

5. Procédé selon l'une des revendications précédentes, **caractérisé en ce que** le faisceau présente une profondeur de pénétration d'au moins 1 mm.

6. Procédé selon l'une des revendications précédentes, **caractérisé en ce que** la pièce est guidée devant le faisceau, tandis que la source de faisceau reste fixe.

7. Procédé selon l'une des revendications précédentes, **caractérisé en ce que** plusieurs côtés mutuellement opposés de la pièce sont traités simultanément.

8. Procédé selon l'une des revendications précédentes, **caractérisé en ce que** le faisceau est guidé suivant un motif en forme de trame sur la surface à traiter.

9. Procédé selon l'une des revendications précédentes, **caractérisé en ce que** le faisceau provoque un enlèvement de matière, de sorte qu'un façonnage de bord ou un profilage de bord, ou un sectionnement de la pièce est possible.

10. Procédé selon l'une des revendications précédentes, **caractérisé en ce qu'**au cours du traitement la surface se situe en dehors d'un plan focal du faisceau introduisant la chaleur, de préférence en dehors d'une plage de Rayleigh.

11. Procédé selon l'une des revendications précédentes, **caractérisé en ce que** la quantité de chaleur introduite est dimensionnée de telle sorte qu'une température du volume en forme de couche reste au-dessous d'une température de combustion ou de carbonisation.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 201626012 U
- EP 1719596 A1
- WO 2006090287 A1
- EP 0481179 A1
- FR 2929876 A1
- DE 19718287 C1